# NEUE EUROPÄISCHE PATENTSCHRIFT

(11) **EP 2 005 813 B2**
(45) Veröffentlichungstag und Bekanntmachung des Hinweises auf die Entscheidung über den Einspruch: **19.11.2014**
(45) Hinweis auf die Patenterteilung: 09.06.2010
(21) Anmeldenummer: 08102933.2
(22) Anmeldetag: 26.03.2008
(51) Int. Cl.: A01D 41/127

(54) **Selbstfahrende landwirtschaftliche Erntemaschine mit Verlustmesseinrichtung**
Self-propelled agricultural harvester with loss measurement device
Moissonneuse agricole automobile dotée d'un dispositif de mesure de perte

(30) Priorität: 22.06.2007 DE 102007029218
(43) Veröffentlichungstag der Anmeldung: 24.12.2008
(73) Patentinhaber: CLAAS Selbstfahrende Erntemaschinen GmbH, 33428 Harsewinkel (DE)
(72) Erfinder: Baumgarten, Joachim, Dr., 48361, Beelen (DE); Brune, Markus, 33428, Marienfeld (DE); Zurhake, Christian, 49429, Visbek (DE)

(56) Entgegenhaltungen:
- EP-A- 0 339 141
- EP-A2- 1 516 522
- DE-A1- 2 445 045
- DE-A1- 2 448 745
- DE-A1- 3 731 080
- DE-U1- 29 822 621
- US-A- 4 036 065
- US-A- 5 046 362

## Beschreibung

Die vorliegende Erfindung bezieht sich allgemein auf das Gebiet der Landwirtschaft und der Verarbeitung von Ernteerzeugnissen. Hierzu werden Fahrzeuge, insbesondere selbstfahrende landwirtschaftliche Erntemaschinen, welche zur Aufnahme der Ernte und zur Verarbeitung des Gutes dienen, eingesetzt. Bei den selbstfahrenden landwirtschaftlichen Erntemaschinen handelt es sich in der Regel um Mähdrescher die mit Einrichtungen zur Verarbeitung und Vorrichtungen zur Förderung des Ernte-gutes ausgestattet sind. Eine solche Fördervorrichtung ist beispielsweise die Reinigungseinrichtung, mit der das Erntegut von den Gut- und Nichtgutanteilen getrennt wird. Eine solche Reinigungsvorrichtung besteht beispielsweise aus einem Gebläse, einem Obersieb und Untersieb, wobei das Ober- und Untersieb als verstellbares Lamellensieb ausgebildet ist und von dem vom Gebläse erzeugten Luftstrom durchsetzt wird. Durch den Luftstrom werden große und leichte Nichtkornanteile, bevor sie das Obersieb erreichen, erfasst und am hinteren Ende des Mähdreschers ausgeschieden. Auch die Schwingbewegung der Siebe, sowie der Luftstrom bewirken eine Förderung der Korn- und Nichtkornanteile zum hinteren Ende des Obersiebes. Die Korn-und Nichtkornanteile fallen einerseits je nach Einstellung der Obersiebweite auf das Untersieb und andererseits über einen Sensor, bestehend aus einem Prallkörper, aus dem hinteren Ende des Mähdreschers. Der Prallkörper kann einen oder mehrere Vibrationsschallaufnehmer zur Detektion der Kornanteile beinhalten. Die Sensoren detektieren die Kornanteile, die aufgrund von anhaftenden Nichtkornbestandteilen nicht durch das Obersieb fallen. Dieser Erntegutanteil, der den Mähdrescher verlässt, wird als Reinigungsverlust bezeichnet.

Um die Reinigungsverluste zu erfassen, sind aus dem Stand der Technik verschiedene selbstfahrende landwirtschaftliche Erntemaschinen, insbesondere Mähdrescher, mit einer Verlustmesseinrichtung für Siebe einer Reinigungseinrichtung mit mindestens einem am hinteren Ende der Reinigungseinrichtung angeordneten Sensor, bekannt. Grundsätzlich besteht eine Verlustmesseinrichtung aus einem Sensor, dem so genannten Prallkörper, auf den das Korn auftrifft, einem Schallaufnehmer, welcher den Aufschlagimpuls detektiert, und einer Auswerteelektronik, die das analoge Signal des Schallaufnehmers auswertet, um es in geeigneter Weise als Fahrerinformation auf einem elektronischen Bord-Informationssystem in einer Verlustanzeige darstellen zu können.

Ein solcher Sensor ist aus der DE 197 25 028 A1 bekannt. Diese Art von Sensor zeigt bei der Detektion von Körnergut jedoch Schwächen. So ist der Sensor durch die fest am Rahmen der Maschine verschraubte Einbaulage stark längsneigungsabhängig, wodurch Körnergut über den Sensor fliegen kann und somit nicht detektiert wird. Auch im Rapsdrusch weist der Sensor Nachteil auf, weil das Körnergut durch das geringe Gewicht nur unzureichend erkannt wird.

Die EP 0 093 991 B1 offenbart eine derartige Körnerverlust-Messvorrichtung für Siebe einer Reinigungsvorrichtung von Mähdreschern, die am hinteren Ende der Reinigungsvorrichtung vorgesehene Sensoren enthält. Der Nachteil dieser konstruktiven Anordnung von Sensoren besteht darin, dass die durch die gitterartige Schutzvorrichtung auf den Sensor fallenden Körner nach der Detektion als Reinigungsverlust auf den Feldboden fallen und nicht verteilt werden, wodurch eine sogenannte Pattbildung entstehen kann. Diese Pattbildung bildet später aufgrund der Keimbildung der Körner und anschließendem Pflanzenwuchs einen unerwünschten grünen Streifen auf dem Feld.

In anderen Ausführungen im Stand der Technik sind die Sensoren in oder über die Zuführorgane, beispielsweise dem Zuführboden des Spreuverteilers, integriert. So wird zwar das Körnergut detektiert, aber vom Spreuwurfgebläse aus zum Strohradialverteiler verteilt. Dieser wiederum verteilt die Körner dann zusammen mit dem Stroh auf die Mähbreite des Feldbodens. Der Transport der Spreu vom Spreuwurfgebläse zum Strohradialverteiler erfolgt in einem gebündelten Strahl durch die Luft. Der Strohradialverteiler ist zur Aufnahme der Spreu dazu mit einer Öffnung in Fahrtrichtung versehen. Durch diese konstruktive Anordnung können jederzeit Spindelstückchen aus Gut- und Nichtgutanteilen mit hoher Geschwindigkeit zurückgeworfen werden und weitere Signale auf den Sensoren auslösen. D.h., dass durch die Absiebung der Spreu und aufgrund von Beeinflussungen durch den Strohradialverteiler oder den Zuführboden die Messungen der Verlustmesseinrichtung negativ beeinflusst werden und ein höherer Reinigungsverlust ermittelt und angezeigt wird, als tatsächlich vorhanden ist und somit eine Fehleinstellung der Reinigungssiebe bzw. Obersiebweite nach sich ziehen kann, wodurch wiederum mehr Nichterntegutanteile im Korntank die Erntegutanteile verunreinigen.

Um den Verlust von Erntegutanteilen, wobei unter Erntegutanteilen beispielsweise die Fruchtarten Mais, Erbsen, Bohnen, Weizen, Gerste, Roggen, Raps und Weidelgras verstanden werden, beim Reinigungsvorgang weiter zu reduzieren bzw. zu minimieren, ist es erforderlich, den Auftreffpunkt der Erntegutanteile auf dem Sensor noch genauer zu definieren und von Nichtkornanteilen frei zu halten.

Der Erfindung liegt daher die Aufgabe zugrunde, eine Verlustmesseinrichtung der eingangs genannten Art zu schaffen, welche die genannten Nachteile der bekannten Anordnungen aus dem Stand der Technik vermeidet und eine technische Lösung anzugeben, die es ermöglicht, den Reinigungsvorgang zu unterstützen bzw. zu entlasten, sodass ein Verlust von Erntegutanteilen durch schlecht positionierte Sensoren vermieden werden kann.

Erfindungsgemäß wird dieses Problem durch die kennzeichnenden Merkmale des Patentanspruchs 1 gelöst. Vorteilhafte Ausgestaltungen und Weiterbildungen der Erfindung ergeben sich aus den Unteransprüchen und der nachfolgenden Beschreibung.

Die Anordnung des Sensors am Ende der Reinigungseinrichtung hinter zumindest einem Sieb derart, dass die auf die Sensorfläche fallenden und detektierten Erntegutanteile in der Erntemaschine verbleiben und einer Überkehreinrichtung zugeführt werden, bietet insbesondere den Vorteil, dass diese weiter separiert werden können und nicht über das Spreuwurfgebläse als Verlust auf dem Feldboden landen und somit nur die Nichtkornanteile zum Spreuwurfgebläse gelangen.

Bei einer vorteilhaften Weiterbildung ist die Sensorfläche nicht parallel zu der Fläche eines an zumindest ein Sieb anschließenden Rechen angeordnet. Der sich zwischen den beiden Flächen aufspannende Winkel ist so eingestellt, dass die Sensorfläche abweisend vom Strohradialverteiler angeordnet und der Reinigungseinrichtung zugeneigt ist. Durch diese Anordnung und Lage des Sensors verringert sich gravierend die Gefahr, dass durch den Spreuwurfverteiler und/oder den Strohradialverteiler zurück gewirbelte Spreu- und/oder Strohteilchen auf die Sensorfläche gelangen und die Messergebnisse beeinflussen. Eine Fehleinstellung der Siebweiten und des Durchsatzes wird somit vermieden. Durch den Aufprall der Erntegutanteile vom Obersieb durch den Rechen auf die Sensorfläche ist die Aufprallgeschwindigkeit der Erntegutanteile zur Erzeugung einer großen Amplitude einer gedämpften Schwingung zur Detektion mit einem Vibrationsschallaufnehmer der bestimmende Faktor der Amplitudenhöhe und leicht beeinflussbar durch eine Veränderung der Fallhöhe der Erntegutanteile. Auch die Aufprallposition des Erntegutes hat einen starken Einfluss auf das Sensorsignal. Je weiter die Aufprallposition der Erntegutanteile vom Sensor entternt liegt, desto geringer wird die Amplitude. Auch werden durch die geringe Fallhöhe und der Schrägstellung der Sensorfläche Fehlmessungen der Erntegutanteile durch die Längsneigung der selbstfahrenden Landmaschine beim Ernteeinsatz zum Sensor ausgeschlossen. Parallel zur Rechenfläche oder anderen Flächen der Siebe angeordnete Sensorflächen haben den Nachteil der Längsneigungsabhängigkeit zur Erntemaschine. Bei der Erntefahrt bergan entsteht eine Längsneigung, bei der die Erntegutanteile hinter die Sensorfläche fliegen und so nicht mehr detektiert werden können, wodurch wiederum Fehlmessungen entstehen.

Der permanente Rücklauf der Erntegutanteile in die Überkehr wird dadurch erreicht, dass für die Befestigung des Sensors erfindungsgemäß eine ein- oder mehrteilige Sensorhalterung mit mehreren Funktionsabschnitten entwickelt wurde. Die vorzugsweise drei Funktionsabschnitte werden aus zumindest einer Öffnung, zumindest einem Befestigungselement und zumindest einem Leitelement gebildet. Die Öffnung dient vorteilhaft zur Aufnahme des Sensors. Das Befestigungselement dient vorteilhaft zur Befestigung der Sensorhalterung an einem Zuführboden einem Spreuwurfgebläses. Das Leitelement ist stufenartig, ähnlich einer Treppe, ausgebildet. Bei einer vorteilhaften Weiterbildung ist an zumindest einem Ende des Leitelementes eine bewegliche Verlängerungsmatte, vorzugsweise ein Gummilelement angeordnet, welche eine bewegliche Verbindung zum Siebkastenendprofil herstellt.

Um das Schwingungsverhalten der Sensorhalterung zu begrenzen, ist an dem stufenförmigen Leitelement ein Stützrahmen angeordnet. Der Stützrahmen kann durch Befestigungsmittel, wie beispielsweise Schweißen, Löten, Schrauben, Nieten oder ähnlichen an den Treppenstufen befestigt sein. Die freien Enden des Stützrahmens dienen der zusätzlichen Befestigung der Sensorhalterung am Zuführboden des Spreuwurfverteilers. In einer anderen Ausführung des Stützrahmens dient dieser ebenfalls der Befestigung an der Sensorhalterung und mit seinen freien Enden der Befestigung an einem Endprofil, welches sich an das Ober- oder Untersieb anschließt, wodurch eine Befestigung des Stützrahmens am Zuführboden entfällt.

Die Verlängerungsmatte und das stufenförmige Leitelement bilden eine Art Leitfläche für einen zwischen dem Untersieb und dem Siebkastenprofil austretenden, von einem Reinigungsgebläse erzeugten Luftstrom, wodurch die Verlustmesseinrichtung von dem Luftstrom überströmt wird, so dass der auf die Verlängerungsmatte, der Leit- und Sensorfläche auftreffende Erntegutanteil eine zusätzliche Reinigung erfährt. Der Luftstrom trennt dabei die Erntegutanteile von der Spreu, wobei die Spreu dem Spreuwurfgebläse und die Erntegutanteile der Überkehr zugeführt wird. Die so zurückgeführten Erntegutanteile werden über die Überkehr erneut dem Dresch- und Reinigungsprozess zugeführt und können somit keine Pattbildung auf dem Feld erzeugen. Durch die auf der Verlängerungsmatte und der Treppenfläche, bzw. der stufenförmigen Leitfläche des Leitelements, geführte Gebläseluft wird zusätzlich die sich daran anschließende Sensorfläche gereinigt bzw. von Ablagerungen freigehalten.

Aufgrund der Auswertung von Messergebnissen bei Aufprallversuchen von Erntegutanteilen auf der Sensorfläche wurde des Weiteren festgestellt, dass zur Erfassung von Verlustgutanteilen von über 95 % prozentualen Anteil eine Prallkörperlänge von 60% der Siebkastenbreite ausreichend ist. Eine Anordnung eines Sensors über die gesamte Breite der Reinigungseinrichtung ist somit nicht erforderlich. Die benötigte Länge und Breite des Sensorfeldes kann, über die Siebbreite, in einzelne partielle Sensorflächen aufgeteilt werden, beispielsweise zwei, drei oder vier einzelne Sensoren, um eine gezielte Aussage zu erreichen, wie sich die Querverteilung der Reinigungsverluste aufteilt. Mit der Information der Querverteilung der Reinigungsverluste ist eine gezielte Ansteuerung der Reinigung schon frühzeitig möglich. Vorzugsweise sind zwei partielle Sensoren rechts und links über die Breite verteilt und am Ende der Reinigungseinrichtung angeordnet, wobei jede Sensorlänge bis zu ca. 30 % der Siebkastenbreite abdeckt. Eine prozentuale Erfassung von mehr als 95% der Verlustanteile wird somit sicher erkannt.

Die Sensorfläche und die Sensorhalterung sind vorteilhaft lösbar oder unlösbar miteinander verbunden. Zur Vermeidung von das Messergebnis verfälschenden Verschmutzungen ist es wichtig, dass zwischen der Sensorfläche und dem Sensorhalter kein Spalt entsteht, in dem sich Erntegutanteile ansammeln können.

Ist die Sensorhalterung beispielsweise aus Kunststoffmaterial hergestellt, kann die Sensorfläche beispielsweise spritzgießtechnisch mit der Sensorhalterung verbunden sein, wobei die Anspritzstelle stumpf oder, zur Erhöhung der Festigkeit der Verbindung, in zwei rechtwinklig zueinander angewinkelten Flanschen ausgebildet sein kann. D.h., ein rechtwinkliger Flansch wäre an der Sensorfläche angelenkt und der andere rechtwinklige Flansch an der Sensorhalterung, sodass beide Flansche mit zwei parallelen Flächen zueinander stehen, wodurch eine größere Verbindungsfläche mit höherer Festigkeit entsteht. Die beiden Flansche können aber auch über verschiedene Befestigungsmittel verbunden werden, vorzugsweise unlösbar durch Nieten oder lösbar durch Schrauben. Die Nahtstelle, die sich zwischen den beiden Flanschen in Form einer Fuge ergibt, ist mit beispielsweise elastischem Material zu versiegeln, um die Bildung von Verschmutzungen zu vermeiden.

Die am Ende der Reinigungseinrichtung angeordnete Verlustmessrinrichtung übernimmt aufgrund ihrer Anordnung eine Förderfunktion für das auftreffende Erntegut in die Überkehr, wobei die Sensorhalterung die Funktion der elastischen und schwingungsdämpfenden Lagerung der Sensorfläche übernimmt. Die Sensorhalterung kann aus beliebigem Material wie beispielsweise Metall oder Kunststoff bestehen. Besteht die Sensorhalterung beispielsweise aus Metall, wird die Verbindung, zwischen der in die vorgesehene Öffnung der Sensorhalterung eingesetzten Sensorfläche, mittels elastischem Materials hergestellt. Als elastische Materiallen kommen beispielsweise verschiedene Silikone in Frage oder je nachdem welches Fertigungsverfahren bei der Montage angewendet wird, auch Materialien die bei Vulkanisierungsverfahren Anwendung finden, beispielsweise EPDM (Ethylen- Propylen- Dien- Kautschuk- Mischung).

Des weiteren kann die Sensorhalterung umlaufend um die Sensorfläche definierte Verjüngungen im Material aufweisen, wodurch die Sensorhalterung elastischer gestaltet wird und die Dämpfungseigenschaften positiv verbessert werden, so dass weniger und gedämpfte, von der Erntemaschine erzeugte Schwingungen das Messergebnis des Sensors beeinflussen.

Ein Ausführungsbeispiel der Erfindung ist in den Zeichnungen rein schematisch dargestellt und wird nachfolgend näher beschrieben. Es zeigt:
- Fig. 1: eine schematische Darstellung eines Mähdreschers mit einer Verlustmesseinrichtung für die Reinigungseinrichtung,
- Fig.2: eine perspektivische Darstellung einer kompletten Verlustmesseinrichtung.
- Fig.3: schematisch in Draufsicht auf die sich am Ende des Obersiebes und unterhalb der Rechen anschließenden Messeinrichtungen und
- Fig.4: in schematischer Darstellung den Detailbereich "A" aus der Fig.1.

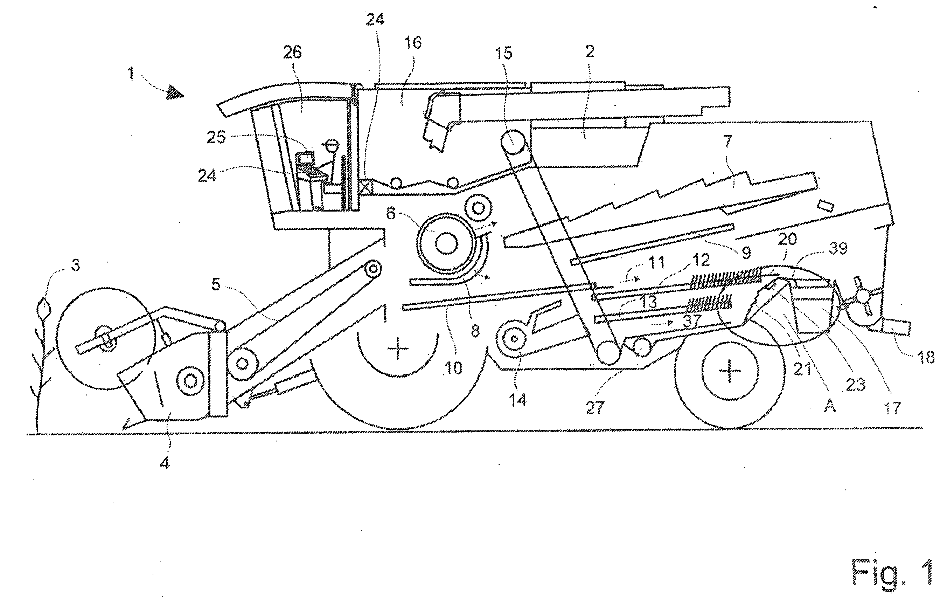

Die Fig.1 zeigt in schematischer Darstellung eine selbstfahrende landwirtschaftliche Erntemaschine 1. welche zur Aufnahme und zur Verarbeitung des Erntegutes 3 dient. Bei der selbstfahrenden landwirtschaftlichen Erntemaschine 1 handelt es sich um einen Mähdrescher 2, der mit einem Schneidwerk 4 ausgestattet ist, welches mit Hilfe des Förderers 5 das Erntegut 3 der Dreschtrommel 6 zuführt, an dem sich ein Hordenschüttler 7 anschließt. Unterhalb des Dreschkorbes 8 und des Hordenschüttlers 7 befindet sich ein Rücklaufboden 9 und eine Rücklaufvorrichtung 10, die ausgeschiedenes Erntegut 3 einer Reinigungseinrichtung 11, bestehend aus Ober 12- und Untersieb 13, zuführt. Die Siebe 12, 13 werden über ein Reinigungsgebläse 14 mit Reinigungsluft, welche durch und über die Siebe 12,13 strömt, versorgt. Das gereinigte Erntegut 3 gelangt über einen Elevatorförderer 15 in einen Korntank 16 und wird dort gesammelt. Ein mittels des Hordenschüttlers 7 geförderter Erntegutanteil, wie beispielsweise Stroh, wird über den hinteren Teil des Mähdreschers 2 einem Radialverteiler 18 zugeführt, der die Erntegutanteile auf dem Feldboden verteilt. Auch die über die Siebe 12,13 durch die Bewegung der Siebe und die Reinigungsluft zum hinteren Ende des Mähdreschers 2 transportierten Erntegutanteile, wie beispielsweise Spreu werden über einen Förderboden 19, neben dem sich rechts und links ein Rechen 20 anschließt, einen Zuführboden 39 und einem Spreu-/Wurfgebläse 17 dem Radialverteiler 18 zur Verteilung auf dem Feldboden zugeführt. Unmittelbar unter dem Rechen 20 ist eine Verlustmesseinrichtung 21 positioniert, die die Erntegutanteile detektiert. Grundsätzlich besteht eine Verlustmesseinrichtung 21 aus einem Sensor, dem so genannten Prallkörper, auf den das Korn auftrifft, einem Schallaufnehmer 23, welcher den Aufschlagimpuls detektiert, und einer Auswerteelektronik, die das analoge Signal des Schallaufnehmers 23 auswertet, um es in geeigneter Weise als Fahrerinformation in der Fahrerkabine 26 auf einem elektronischen Bord-Informations system 24 einer Verlustanzeige 25 darstellen zu können. Die Verlustmesseinchtung 21 ist konstruktiv derart positioniert, das die das am Ende des Obersiebes 12 der Reinigungseinrichtung 11 verlassenden Erntegutanteile nicht nach hinten abgleiten und als Pattbildung auf dem Feldboden landen, sondern derart auf die Sensorfläche auftreffen, dass diese in die Überkehr 27 gelangen.

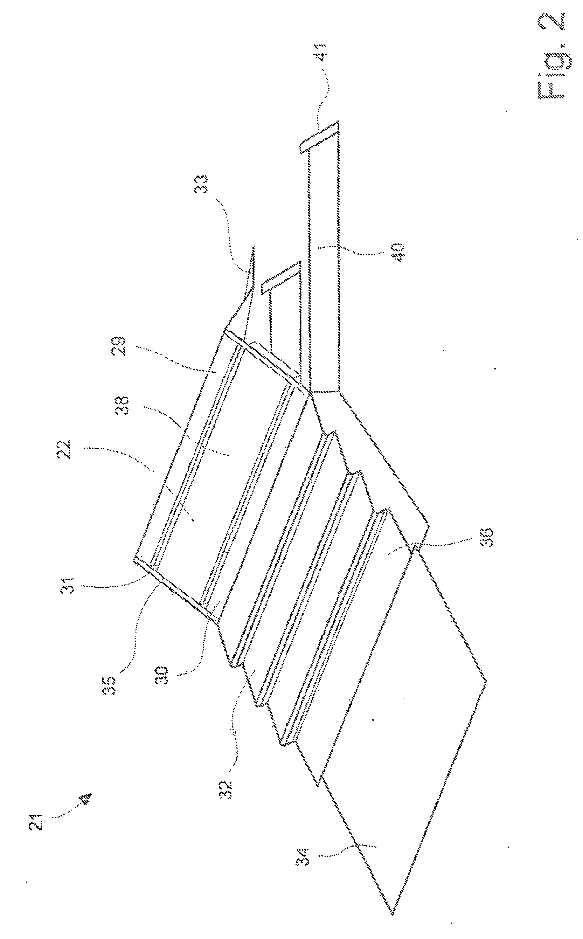

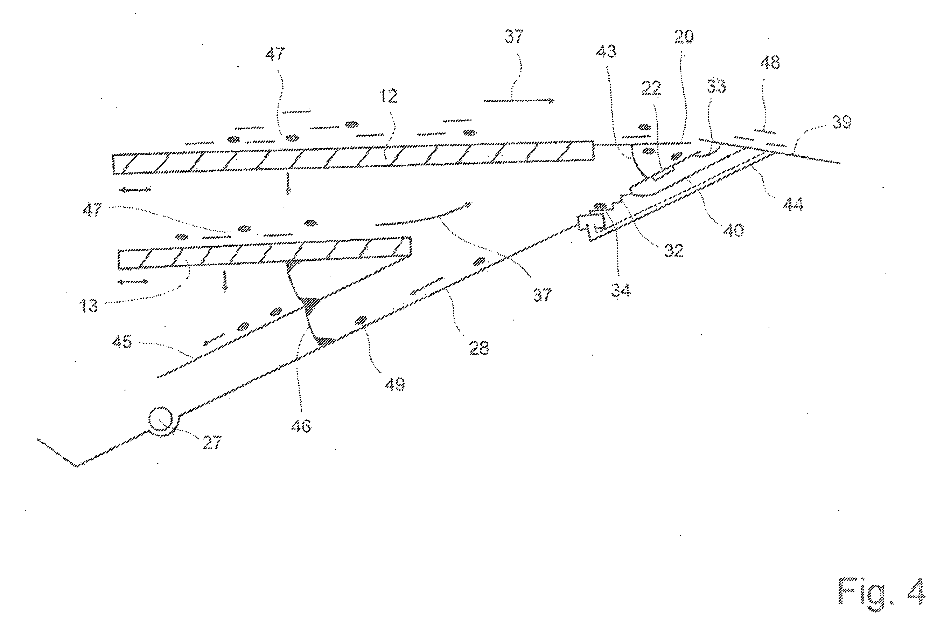

Aus der Fig.2 ist in perspektivischer Darstellung die erfindungsgemäße Verlustmesseinrichtung 21 ersichtlich. Die Verlustmesseinrichtung 21 besteht im Prinzip aus einer Sensorhalterung 29, die drei Funktions bereiche aufweist. Die drei Funktionsbereiche der Sensorhalterung 29 werden aus den drei Einzelteilen, dem Halteelement 30 wel-ches eine Öffnung 31 zur Aufnahme des Sensors 22 enthält, dem stufenartigen Leitelement 32, an weiches sich eine Verlängerungsmatte 34 anschließt und einem Befestigungselement 33 zur lösbaren Befestigung am hier nicht dargestellten Zuführboden gebildet. Vorzugsweise ist die Sensorhalterung 29 einteilig als Stanz- und Biegeteil oder Spritzgussteil hergestellt. Der Funktionsbereich mit der Öffnung 31 übernimmt die Tragfunktion für den Sensor 22, wobei der Spalt zwischen dem Sensor 22 und der Öffnung 31 der Sensorhalterung 29 mittels elastischem Materials 35 ausgefüllt wird, um die akustischen Wellen der Erntemaschine bei der Detektion der Körner durch den Vibrationsaufnehmer 23 zu reduzieren. Der sich anschließenden Funktionsbereich wird durch das Befestigungselement 33 gebildet. welches eine feste Verbindung der Sensorhalterung 29 mit dem Zuführboden des Spreu- und Wurfgebläses sicherstellt oder das Befestigungselement 33 ist Teil der Sensorhalterung 29. Der dritte Funktionsbereich wird durch ein Leitelement 32 gekennzeichnet, welches stufenförmig ausgebildet ist, vorzugsweise aus drei Stufen, wobei die Anzahl der Stufen variieren kann und weist in Richtung der Reinigungseinrichtung. Das stufenförmige Leitelement 32 schließt sich nahtlos an den Sensor 22 an, um Anlagerungen von Erntegutanteilen zu vermeiden. Am anderen Ende des stufenförmigen Leitelements 32 ist eine Verlängerungsmatte 34, vorzugsweise ausgebildet als Gummilatz, befestigt, wobei die Befestigung mittels unterschiedlicher Befestigungsmittel, wie Schrauben, Nieten usw., erfolgen kann. Die Verlängerungsmatte 34 bildet einerseits mit dem stufenförmigen Leitelement 32 eine Leitfläche 36 für den von dem Reinigungsgebläse erzeugten Luftstrom und andererseits eine bewegliche Verbindung zum Boden der Reinigungseinrichtung, dem Siebkastenendprofil. Aufgrund der Leitfläche 36 wird die Sensorfläche 38 des Sensors 22 von der dem Untersieb überströmenden Luftstrom des Reinigungsgebläses umströmt. Der Luftstrom trennt dabei die Erntegutanteile von der Spreu, wobei die Erntegutanteile der Überkehr und die Spreu über das Befestigungselements 33 dem Zuführboden des Spreu-/ Wurfgebläses zugeführt wird. Wie insbesondere aus Verbindung der Figuren 2 und Figur 4 hervorgeht, ist die Sensorfläche 38 derart angewinkelt, dass die Verlustmesseinrichtung 21 nicht parallel zum Rechen 20 positioniert ist, sondern einen Winkel 43 aufweist. Erfindungsgemäß weist die Sensorfläche 38 aufgrund des Winkels 43 nicht zum Zuführboden 39, sondern in Richtung der Reinigungseinrichtung 11. wodurch die Erntegutanteile nicht mehr als Verlust auf dem Feldboden landen. Zur Erhöhung der Festigkeit der Sensorhalterung 29 am Zuführboden 39 und zur Reduzierung der Schwingungen auf den Sensor 22 ist am stufenförmigen Leitelement 32 ein Stützrahmen 40 angeordnet. Der Stützrahrmen 40 ist einerseits an dem Leitelement 32, beispielsweise durch Schweißen, befestigt, aber auch andere Befestigungsarten sind möglich und andererseits mit den beiden freien Enden 41 lösbar mit dem Zuführboden 39 verbunden. Der einteilige Stützrahmen 40 ist der Form des stufenförmigen Leitelements 32 nachgebildet, kann aber auch einen erhöhten Randbereich (nicht dargestellt) zum Führen der Erntegutanteile aufweisen. Der Stützrahmen 40 ist des weiteren derart ausgebildet, das dieser den Winkel, der sich zwischen dem Befestigungselement 33 und Halteelement 30 ergibt, fixiert. Der Stützrahmen 40 fixiert die Verlustmesseinrichtung 21 in schräger Position zum Rechen 20, wodurch der Rücklauf der Erntegutanteile 3 in die Überkehr 27 erfolgt.

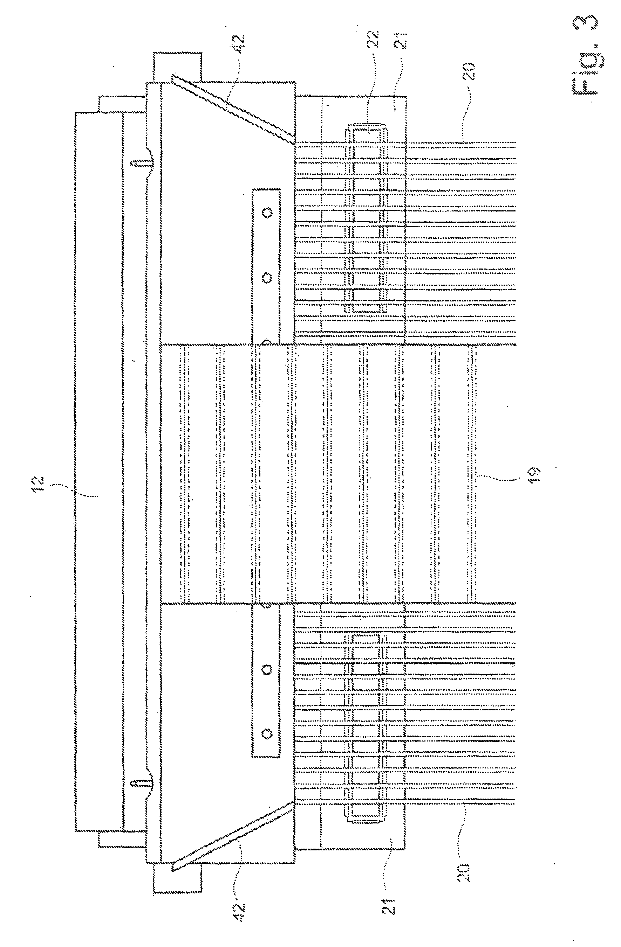

Aus der Fig.3 ist in schematischer Darstellung und Draufsicht die Anordnung der beiden Messeinrichtungen 21 hinter dem Obersieb 12 und rechts und links neben dem Förderboden 19, unmittelbar unter dem Rechen 20, ersichtlich. Aufgrund der Zweiteilung der Sensoren 22 kann bereits bei der Ernte in der Feldebene bei entsprechender Missverteilung des Erntegutes auf dem Obersieb 12 die Einstellung der Reinigungseinrichtung beeinflusst werden. Des weiteren kann durch angeordnete Leitbleche 42 rechts und links der Austrittsöffnung am Ende vom Obersieb 12 eine Einschnürung für das Erntegut erreicht werden. Durch die Einschnürung wird die Förderung von Emtegutanteilen auch bei der Ernteaufnahme im Seitenhang auf die Sensoren 22 gewährleistet.

Die Fig.4 zeigt in schematischer Darstellung den Detailbereich "A" aus der Fig.1 mit der schrägen Anordnung der Messeinrichtung zur Förderung der aus Körnern 49 bestehenden Erntegutanteile in die Überkehr 27. Des weiteren ist ein Körnerboden 45 der über ein Koppelelement 46 mit dem Untersieb 13 verbunden ist, ersichtlich. Das Koppelelement 46 stellt weiterhin eine Verbindung zum Boden 28 her. Der Boden 28 ist wiederum an seinem hinteren Ende über Befestigungselemente 44, ebenfalls wie die Verlustmesseinrichtung mit dem Zuführboden 39 verbunden. Eine weitere Verbindung zwischen der Verlustmesseinrichtung, bestehend aus dem Sensor 22, dem Leitelement 32 und der Verlängerungsmatte 34 und dem Zuführboden 39 erfolgt über das Befestigungselement 33. Alternativ ist die Verlustmesseinrichtung nicht mit dem Befestigungselement 33 und Stützrahmen 40 am Zuführboden 39 befestigt, sondern über Halteelemente (nicht dargestellt) mit dem Obersieb 13 oder Untersieb 12 verbunden.
Durch die Schwingbewegung des Untersiebes 13. welche beispielsweise zum Obersieb 12 gegenläufig schwingen kann, wird gleichzeitig auch der Körnerboden 45, der Boden 28, der Zuführboden 39 und die Verlustmesseinrichtung bewegt, sodass alle Elemente eine fördernde Wirkung auf den Gutstrom ausüben.
Sowohl auf dem Obersieb 12 als auch auf dem Untersieb 13 befindet sich ein aus einem Körner-/Spreugemisch 47 bestehender Gutstrom. Durch die Bewegung der Sieb 12,13 fallen die schwereren Körner 49 durch die Siebe 12,13 auf den Körnerboden. Bedingt durch die Schwingbewegung der Siebe 12,13 in Verbindung mit dem Luftstrom 37 wird die leichter Spreu 48 und einige Körner 49 über das hintere Ende der Siebe 12,13 hinaus in Richtung des Zuführbodens 39 gefördert. Hierbei fallen wiederum die sich noch im Gutstrom befindlichen Körner 49 auf die Verlustmesseinrichtung und werden wie bereits weiter oben beschrieben über den Boden 28 der Überkehr 27 zugeführt.

### Bezugszeichenliste:

- 1: Erntemaschine
- 2: Mähdrescher
- 3: Erntegut
- 4: Schneidwerk
- 5: Förderer
- 6: Dreschtrommel
- 7: Hordenschüttler
- 8: Dreschkorb
- 9: Rücklaufboden
- 10: Rücklaufvorrichtung
- 11: Reinigungseinrichtung
- 12: Obersieb
- 13: Untersieb
- 14: Reinigungsgebläse
- 15: Elevatorförderer
- 16: Korntank
- 17: Spreu-/Wurfgebläse
- 18: Radialverteiler
- 19: Förderboden
- 20: Rechen
- 21: Verlustmesseinrichtung
- 22: Sensor
- 23: Schallaufnehmer
- 24: Bordinfomiationssystem
- 25: Verlustanzeige
- 26: Fahrerkabine
- 27: Überkehr
- 28: Boden
- 29: Sensorhalterung
- 30: Halteelement
- 31: Öffnung
- 32: Leitelement
- 33: Befestigungselement
- 34: Verlängerungsmatte
- 35: Elastisches Material
- 36: Leitfläche
- 37: Luftstrom
- 38: Sensorfläche
- 39: Zuführboden
- 40: Stützrahrnen
- 41: Freie Enden
- 42: Leitblech
- 43: Winkel
- 44: Befestigungselement
- 45: Körnerboden
- 46: Koppelelement
- 47: Körner-/Spreugemisch
- 48: Spreu
- 49: Körner

## Patentansprüche

1. Selbstfahrende Erntemaschinen (1), insbesondere Mähdrescher (2), mit einer Verlustmesseinrichtung (21) für Siebe (12,13), einer Reinigungseinrichtung (11) mit mindestens einem am hinteren Ende der Reinigungseinrichtung (11) angeordneten Sensor (22), wobei der Sensor (22) am Ende der Reinigungseinrichtung (11) hinter zumindest einem Sieb (12, 13) derart angeordnet ist, dass die auf die Sensorfläche (38) fallenden und detektierten Erntegutanteile in der Erntemaschine (1) verbleiben und einer Überkehreinrichtung zugeführt werden, **dadurch gekennzeichnet, dass** die Anordnung des mindestens einen Sensors (22) durch eine Sensorhalterung (29) bestimmt wird, die mehrere Funktionsabschnitte aufweist, welche aus zumindest einer Öffnung (31), zumindest einem Befestiounoselement (33) und zumindest einem stufenartig ausgebildeten Leitelement (32) gebildet werden.

2. Selbstfahrende Erntemaschinen (1) nach Anspruch 1, **dadurch gekennzeichnet, dass** die Sensorfläche (38) nicht parallel zu der Fläche eines an zumindest ein Sieb (12,13) anschließenden Rechen (20) angeordnet, und unter einem bestimmten Winkel (43) der Reinigungseinrichtung (11) zugeneigt ist.

3. Selbstfahrende Erntemaschinen (1) nach Anspruch 1 oder 2, **dadurch gekennzeichnet, dass** die zumindest eine Öffnung (31) zur Aufnahme des Sensors (22) dient.

4. Selbstfahrende Erntemaschinen (1) nach einem der Ansprüche 1 bis 3, **dadurch gekennzeichnet, dass** das zumindest eine Befestigungselement (33) zur Befestigung der Sensorhalterung (29) an einem Zuführboden (39) eines Spreuwurfverteilers (17) dient.

5. Selbstfahrende Erntemaschinen (1) nach einem der Ansprüche 1 bis 4, **dadurch gekennzeichnet, dass** an zumindest einem Ende des Leitelements (32) eine Verlängerungsmatte (34) angeordnet ist.

6. Selbstfahrende Erntemaschinen (1) nach einem der vorstehenden Ansprüche, **dadurch gekennzeichnet, dass** die Verlustmesseinrichtung (21) von einem mittels eines Reinigungsgebläses (14) erzeugten Luftstrom (37) überströmt wird.

7. Selbstfahrende Erntemaschinen (1) nach einem der vorstehenden Ansprüche, **dadurch gekennzeichnet, dass** die Länge und Breite des Sensorfeldes über die Siebbreite in einzelne partielle Sensorflächen (38) aufgeteilt ist.

8. Selbstfahrende Erntemaschinen (1) nach einem der vorstehenden Ansprüche, **dadurch gekennzeichnet, dass** die Sensorfläche (38) und die Sensorhalterung (29) lösbar oder unlösbar miteinander verbunden sind.

9. Selbstfahrende Erntemaschinen (1) nach Anspruch 8, **dadurch gekennzeichnet, dass** die Sensorfläche (38) spritzgießtechnisch mit der Sensorhalterung (29) verbunden ist.

10. Selbstfahrende Erntemaschinen (1) nach einem der Ansprüche 8 oder 9, **dadurch gekennzeichnet, dass** die Sensorfläche (38) elastisch und schwingungsgedämpft mit der Sensorhalterung (29) verbunden ist.

11. Selbstfahrende Erntemaschinen (1) nach einem der Ansprüche 8 bis 10, **dadurch gekennzeichnet, dass** die Sensorhalterung (29) umlaufend um die Sensorfläche (38) Verjüngungen im Material aufweist.

## Claims

1. Self-propelled harvesting machines (1), in particular combine harvesters (2), comprising a loss-measuring device (21) for sieves (12, 13) of a cleaning device (11), and at least one sensor (22) arranged at the rear end of the cleaning device (11), wherein the sensor (22) is arranged at the end of the cleaning device (11) behind at least one sieve (12, 13) in such a way that the crop material components which fall on to the sensor surface (38) and are detected remain in the harvesting machine (1) and are fed to a tailings device, **characterised in that** the arrangement of the at least one sensor (22) is determined by a sensor holder (29) having a plurality of functional portions which are formed from at least one opening (31), at least one fixing element (33) and at least one guide element (32) of a stepped configuration.

2. Self-propelled harvesting machines (1) according to claim 1 **characterised in that** the sensor surface (38) is not arranged parallel to the surface of a rake (20) which adjoins at least one sieve (12, 13) and is inclined towards the cleaning device (11) at a given angle (43).

3. Self-propelled harvesting machines (1) according to claim 1 or claim 2 **characterised in that** the at least one opening (31) serves to receive the sensor (22).

4. Self-propelled harvesting machines (1) according to one of claims 1 to 3 **characterised in that** the at least one fixing element (33) serves for fixing the sensor holder (29) to a feed plate (39) of a chaff projection distributor (17).

5. Self-propelled harvesting machines (1) according to one of claims 1 to 4 **characterised in that** an extension mat (34) is arranged at at least one end of the guide element (32).

6. Self-propelled harvesting machines (1) according to one of the preceding claims **characterised in that** the loss-measuring device (21) has flowing thereover an air flow (37) produced by means of a cleaning blower (14).

7. Self-propelled harvesting machines (1) according to one of the preceding claims **characterised in that** the length and width of the sensor area is divided over the sieve width into individual partial sensor surfaces (38).

8. Self-propelled harvesting machines (1) according to one of the preceding claims **characterised in that** the sensor surface (38) and the sensor holder (29) are releasably or non-releasably connected together.

9. Self-propelled harvesting machines (1) according to claim 8 **characterised in that** the sensor surface (38) is connected to the sensor holder (29) by injection moulding.

10. Self-propelled harvesting machines (1) according to one of claims 8 and 9 **characterised in that** the sensor surface (38) is connected to the sensor holder (29) in elastic and vibration-damped relationship.

11. Self-propelled harvesting machines (1) according to one of claims 8 to 10 **characterised in that** the sensor holder (29) has reductions in the material circumferentially around the sensor surface (38).

## Revendications

1. Machines de récolte automotrices (1), en particulier moissonneuses-batteuses (2), comportant un dispositif de mesure de perte (21) pour des cribles (12, 13) d'un dispositif de nettoyage (11) avec au moins un capteur (22) disposé à l'extrémité arrière du dispositif de nettoyage (11), le capteur (22) étant disposé à l'extrémité du dispositif de nettoyage (11) derrière au moins un crible (12, 13), de sorte que les portions de produit récolté tombant et détectées sur la surface de capteur (38) restent dans la moissonneuse (1) et sont amenées à un dispositif de recyclage des otons, **caractérisées en ce que** la disposition dudit au moins un capteur (22) est déterminée par un support de capteur (29) qui présente plusieurs parties fonctionnelles, lesquelles sont formées d'au moins une ouverture (31), d'au moins un élément de fixation (33) et d'au moins un élément de guidage (32) configuré en étages.

2. Machines de récolte automotrices (1) selon la revendication 1, **caractérisées en ce que** la surface de capteur (38) n'est pas disposée parallèlement à la surface d'un râteau (20) se raccordant à au moins un crible (12, 13) et est inclinée selon un angle (43) déterminé du dispositif de nettoyage (11).

3. Machines de récolte automotrices (1) selon la revendication 1 ou 2, **caractérisées en ce que** ladite au moins une ouverture (31) sert à loger le capteur (22).

4. Machines de récolte automotrices (1) selon l'une des revendications 1 à 3, **caractérisées en ce que** ledit au moins un élément de fixation (33) sert à fixer le support de capteur (29) à une table d'alimentation (39) d'un éparpilleur de menues pailles (17).

5. Machines de récolte automotrices (1) selon l'une des revendications 1 à 4, **caractérisées en ce qu'**à au moins une extrémité de l'élément de guidage (32) est disposé un tapis de prolongement (34).

6. Machines de récolte automotrices (1) selon l'une des revendications précédentes, **caractérisées en ce que** le dispositif de mesure de perte (21) est balayé par un flux d'air (37) généré au moyen d'une soufflerie de nettoyage (14).

7. Machines de récolte automotrices (1) selon l'une des revendications précédentes, **caractérisées en ce que** la longueur et la largeur du champ de capteur sont réparties sur la largeur de crible en surfaces de capteur (38) partielles séparées.

8. Machines de récolte automotrices (1) selon l'une des revendications précédentes, **caractérisées en ce que** la surface de capteur (38) et le support de capteur (29) sont reliés entre eux de manière amovible ou inamovible.

9. Machines de récolte automotrices (1) selon la revendication 8, **caractérisées en ce que** la surface de capteur (38) est reliée au support de capteur (29) par la technique de moulage par injection.

10. Machines de récolte automotrices (1) selon l'une des revendications 8 ou 9, **caractérisées en ce que** la surface de capteur (38) est reliée au support de capteur (29) de manière élastique et antivibratile.

11. Machines de récolte automotrices (1) selon l'une des revendications 8 à 10, **caractérisées en ce que** le support de capteur (29) présente, autour de la surface de capteur (38), des rétrécissements de matériau.
